# DEMANDE DE BREVET EUROPEEN

(11) **EP 1 712 434 A1**
(43) Date de publication de la demande: **18.10.2006**
(21) Numéro de dépôt: 06300314.9
(22) Date de dépôt: 31.03.2006
(51) Int. Cl.: B60R 21/34

(54) **Butée rétractable au choc pour véhicule automobile**

(30) Priorité: 14.04.2005 FR 0550952
(71) Demandeur: Peugeot Citroen Automobiles SA, 78140 Vélizy-Villacoublay (FR)
(72) Inventeur: Talibart, Christian, 95000 Cergy (FR)

(57) **Abrégé**

Butée rétractable au choc pour véhicule automobile, comportant un corps cylindrique (17) à axe sensiblement vertical, associé à une collerette (21) s'étendant dans un plan horizontal, le corps recevant un embout d'appui (18), à positionnement réglable axialement et sur lequel s'appuie un élément mobile (5,12), du genre capot d'obturation du compartiment moteur (4) du véhicule, appliqué sur la butée lors de la fermeture de ce capot, caractérisée en ce que le corps (17) présente une souplesse relative dans le sens axial et est aménagé pour être partiellement rétractable par enfoncement à force à l'intérieur de la collerette (21) sous l'effet d'un choc sur le capot (5) dépassant un seuil donné, en permettant d'absorber l'énergie cinétique créée par ce choc.

## Description

La présente invention est relative à une butée rétractable au choc pour véhicule automobile, notamment destinée à être montée entre un élément de support fixe, en particulier une partie de la caisse de ce véhicule et un élément mobile, apte à s'appuyer cette dernière par l'intermédiaire de cette butée, telle par exemple qu'un capot rabattable fermant le compartiment moteur, en s'appliquant sur le bord de la caisse qui délimite ce dernier.

L'utilisation dans un véhicule de telles butées d'appui du capot, qui peuvent être selon le cas portées par celui-ci dans sa surface inférieure ou solidarisées de la caisse formant l'élément de support fixe, et qui sont avantageusement conçues pour permettre un positionnement réglable en hauteur, entre les parties fixe et mobile, est parfaitement usuel dans la technique, ces butées comportant généralement un embout cylindrique engagé dans un fût tubulaire ou autre, fixé au support ou au capot par des moyens à vis ou équivalent, autorisant un réglage de position du premier dans le second en ajustant la longueur totale de l'ensemble disposé entre la caisse et le capot lorsque celui-ci est fermé.

Un ressort peut en outre être prévu pour conférer à l'embout de la butée une faculté de déplacement par rapport au fût afin d'accommoder les chocs à la fermeture du capot, cet embout pouvant s'effacer momentanément sous l'impact pour revenir ensuite à sa position initiale.

Les brevets français 2.565.649, 2.801.626 et 2.830.584, ou encore les brevets US 3.336.962 ou 2002 / 03993, illustrent diverses réalisations de ce genre.

Toutefois, en dépit de la possibilité offerte d'encaisser les effets des chocs produits lors de la fermeture du capot, qui restent d'intensité limitée, en provoquant un déplacement de la butée d'amplitude réduite, ces dispositifs ne sont pas adaptés pour amortir les effets de chocs plus importants, qui peuvent se produire par exemple lorsque, à l'occasion d'un accident de la circulation, un piéton et tout spécialement la tête de celui-ci vient violemment frapper contre le capot déjà appliqué sur la caisse par l'intermédiaire de ces butées.

Le choc produit dans ce cas peut provoquer un enfoncement localisé du capot sur une profondeur susceptible d'atteindre 80 mm, selon les dispositions envisagées par la Norme TP-F/22/03.

Les butées classiques ne peuvent pas encaisser un tel impact, les embouts réglables venant dès lors brutalement en contact avec leur surface d'appui dans le fût, qui sont eux-mêmes en contact avec le support fixe de la caisse.

En conséquence, ces butées au-delà de leur faculté d'amortissement réduite, forment un point dur de sorte que la réaction au choc de la partie fixe est intégralement renvoyée vers le capot et la tête du piéton accidenté, pouvant ainsi occasionner des lésions importantes.

La présente invention concerne une butée rétractable, agencée de manière à absorber les chocs créés dans les conditions ainsi rappelées, permettant de satisfaire aux exigences de la Norme en absorbant la majeure partie des effets de ces chocs.

Selon l'invention, la butée considérée, comportant un corps cylindrique à axe sensiblement vertical, associé à une collerette de maintien, comprenant des moyens propres à ajuster son positionnement en hauteur vis-à-vis d'un support fixe appartenant à la carrosserie d'un véhicule automobile, cette collerette s'étendant dans un plan horizontal, le corps recevant un embout d'appui à positionnement réglable axialement et sur lequel s'appuie un élément mobile, du genre capot d'obturation du compartiment moteur du véhicule appliqué sur la butée lors de la fermeture de ce capot, se caractérise en ce que le corps présente une souplesse relative dans le sens axial et est aménagé pour être partiellement rétractable par enfoncement à force à l'intérieur de la collerette sous l'effet d'un choc sur le capot dépassant un seuil donné, en permettant d'encaisser l'énergie cinétique créée par ce choc.

De préférence, l'embout comporte un filetage externe coopérant avec un filetage homologue prévu dans le corps. Avantageusement, l'embout comprend une portée d'extrémité, sur laquelle s'appuie le capot.

Selon une caractéristique particulière et dans un mode de réalisation préféré de l'invention, le corps comporte une surface extérieure délimitée par une succession de nervures circonférentielles, séparées par des zones en léger retrait formant autant de positions étagées d'arrêt du corps, consécutivement à l'effort d'enfoncement de celui-ci dans la collerette sous l'effet du choc.

Avantageusement, les zones en retrait du corps séparant deux nervures circonférentielles successives présentent une surface dont le profil concave est dirigé vers l'intérieur du corps.

Selon une autre caractéristique, la collerette comporte une bague d'arrêt cylindrique, présentant un passage central autorisant l'enfoncement axial du corps, et une agrafe propre à se disposer dans une zone en retrait du corps pour immobiliser celui-ci en l'absence d'effort d'enfoncement.

De préférence, l'agrafe est métallique et forme ressort de pincement à action transversale, apte à s'engager dans la zone en retrait située en regard afin d'immobiliser le corps vis-à-vis de la collerette, l'effort exercé sur l'embout provoquant la sortie de l'agrafe de la zone en permettant l'enfoncement du corps dans le passage central de la collerette, jusqu'à ce que, en fin de course, l'agrafe se rétracte et arrête à nouveau le corps dans la collerette.

Dans un mode de réalisation préféré, l'agrafe est métallique et présente un profil en épingle à cheveux, avec une anse médiane, permettant son extraction par glissement dans son plan contre la collerette.

Selon une caractéristique annexe, l'agrafe est maintenue appliquée contre la collerette par la bague d'arrêt.

Dans une variante de réalisation, l'agrafe est venue de fabrication avec la collerette, et réalisée en un matériau plastique moulé.

D'autres caractéristiques d'une butée rétractable aux chocs pour véhicule automobile, établie conformément à l'invention, apparaîtront encore à travers la description qui suit d'un exemple de réalisation, donné à titre indicatif et non limitatif, en référence aux dessins annexés, sur lesquels :
- La Figure 1 est une vue schématique en perspective d'une fraction de la caisse d'un véhicule automobile au droit du capot qui recouvre le compartiment moteur de celui-ci, illustrant le positionnement des butées d'appui de ce capot en position de fermeture.
- La Figure 2 est une vue en coupe transversale, à plus grande échelle, d'un mode de réalisation d'une butée d'un type connu dans la technique, disposée entre un support fixe de la caisse et le capot.
- La Figure 3 est une vue en perspective, à plus grande échelle, d'une butée rétractable réalisée conformément à l'invention.
- La Figure 4 est une vue en coupe illustrant le positionnement de la butée de la Figure 3, entre un support fixe appartenant à la caisse du véhicule et le capot de fermeture du compartiment moteur.

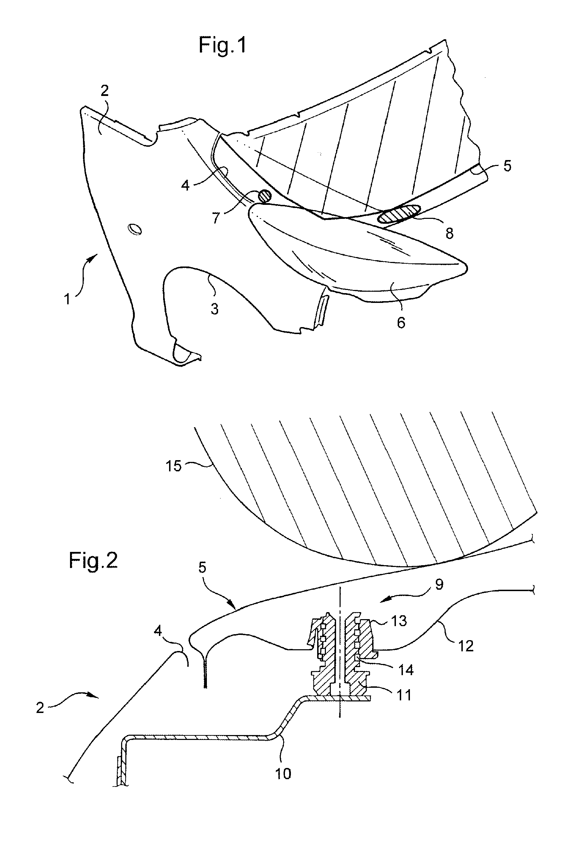

Sur la Figure 1, la référence 1 désigne dans son ensemble une partie de la caisse d'un véhicule automobile comportant en particulier un élément de carrosserie 2, muni d'une découpe 3 ménagée au droit d'une des ailes avant de ce véhicule, cet élément comprenant une ouverture délimitant le contour du compartiment 4 dans lequel est logé le moteur de ce dernier.

Le compartiment moteur 4 est normalement obturé par un capot de fermeture 5 dont le détail de la réalisation n'importe pas à l'invention, ce capot articulé sur la caisse assurant, lorsqu'il est rabattu sur l'ouverture 4, la continuité de la carrosserie.

Sur le dessin, on a schématiquement représenté l'un des phares 6 du véhicule, monté dans un logement approprié de l'élément 2, en avant du capot de fermeture 5.

Sur la Figure 1, on a également représenté, en 7 et 8, des emplacements prévus dans l'élément de carrosserie 2, à la périphérie du compartiment 4, pour recevoir des butées d'appui, aptes à se disposer entre la carrosserie et le capot lorsque celui-ci ferme ce compartiment.

La Figure 2 illustre schématiquement un mode de réalisation d'une butée 9, d'un type en lui-même connu dans la technique, qui, dans sa forme la plus simple, est prévue pour être disposée entre, d'une part un support fixe 10, appartenant à l'élément de carrosserie 2, et d'autre part le capot de fermeture 5, la description détaillée de cette butée classique n'étant pas nécessaire pour la bonne compréhension de l'invention telle qu'exposée ci-après.

Il suffit simplement de constater que la butée 9 représentée comporte essentiellement un corps cylindrique 11 reposant, en position de fermeture du capot 5 sur le support fixe 10, ce capot comportant un renfort interne 12 dont est solidaire une douille 13 pouvant coulisser sur le corps 11 en comprimant un ressort 14.

Lorsque le capot 5 est appliqué sur l'élément de carrosserie 2 pour fermer le compartiment moteur 4, le ressort 14 entraîné par la douille 13 se comprime légèrement, cette douille coulissant sur le corps 11 en amortissant dans la même mesure le choc créé lors de cette fermeture par contact du corps avec le support fixe 10, la détente du ressort ramenant ensuite la douille en position initiale.

Ces dispositions sont notoirement insuffisantes pour permettre, conformément à la Norme TP-F/22/03, d'assurer une protection acceptable dans le cas d'un accident où le véhicule rencontre ou projette malencontreusement un piéton dont la tête 15, grossièrement symbolisée par la zone hachurée sur la Figure 2, vient brutalement frapper le capot 5, la course limitée de la butée 9 assurée par la compression du ressort 14 n'ayant qu'un effet mineur vis-à-vis des conditions d'amortissement des effets de ce choc.

En effet, l'appui de la douille 13 sur le corps 11 consécutivement à la compression maximale du ressort 14, qui représente à peine quelques millimètres, contribue à ce que la butée devienne au-delà, notamment dès que l'effort dépasse le seuil correspondant, un élément totalement rigide formant un point dur, de sorte que, par réaction sur le support fixe 10, la quasi-totalité de l'énergie du choc de la tête 15 sur le capot 5 soit renvoyée vers cette tête, en risquant de lui occasionner des lésions parfois irréversibles.

La présente invention concerne une butée rétractable qui vise à éviter cet inconvénient particulièrement grave, en permettant notamment que, dans le cas d'un choc de grande ampleur, comme celui créé par l'impact brutal de la tête d'un piéton sur le capot, ce dernier puisse s'enfoncer sur une distance de l'ordre de 80 mm comme imposé par la Norme déjà mentionnée, la butée, lors du dépassement du seuil qui correspond à l'effort plus réduit qu'elle encaisse à l'occasion de la fermeture normale du capot, pouvant dans ce cas s'effacer par rapport au support fixe sur laquelle elle s'appuie ou est rapportée, en absorbant l'énergie cinétique notablement plus élevée correspondant au choc créé.

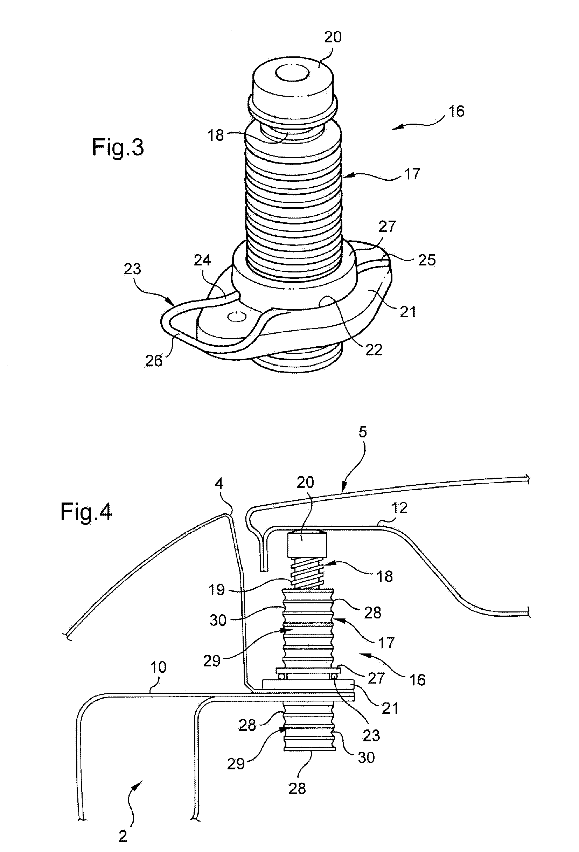

Les Figures 3 et 4 illustrent, dans un mode de réalisation préféré, la structure de la butée considérée et ses modalités de montage entre le support fixe et le capot de fermeture, cette butée étant ici désignée dans son ensemble sous la référence 16.

La butée comporte principalement un corps cylindrique 17 de forme tubulaire, agencé pour présenter une relative souplesse et disposé de préférence avec son axe sensiblement vertical, ce corps recevant intérieurement un embout d'extrémité 18 réglable en hauteur grâce à la présence sur la surface externe de cet embout, d'un filetage 19 coopérant avec un filetage homologue (non représenté) ménagé dans le corps 17.

L'embout 18 comporte à son extrémité supérieure une portée 20 sur laquelle vient s'appuyer le renfort interne 12 du capot 5, le réglage en hauteur de l'embout 18 et de sa portée 20 étant ajusté de sorte que, en position de fermeture, le capot 5 obture convenablement le compartiment moteur 4 en se situant exactement dans le prolongement de l'ouverture de celui-ci.

Le support fixe 10 de l'élément de carrosserie 2 qui porte la butée 16 comporte une collerette de maintien 21, qui s'étend sensiblement horizontalement dans une direction perpendiculaire à l'axe du corps 17. Cette collerette 21 comprend un passage central 22, librement traversé par la partie inférieure du corps 17.

A la collerette 21 est associée une agrafe métallique 23, en forme d'épingle à cheveux, avec des branches latérales 24 et 25 réunies par une anse de liaison 26 permettant de la saisir pour effectuer la mise en place ou le retrait de l'agrafe au-dessus de la collerette 21, par glissement parallèlement au plan de celle-ci.

L'agrafe 23 est maintenue appliquée sur la collerette 21 par une bague 27.

Le corps tubulaire 17 de l'agrafe 16 est formé par une succession de nervures circonférentielles 28, qui s'étendent chacune dans un plan horizontal, perpendiculairement à l'axe vertical du corps et qui, de préférence, sont séparées de l'une à la suivante par une distance identique d'un couple de nervures à l'autre, sur toute la hauteur de ce corps.

Entre deux nervures circonférentielles 28, le corps présente des zones 29 en léger retrait par rapport à son contour extérieur, ces zones formant autant de positions étagées pour l'arrêt du corps 17 dans son mouvement d'enfoncement à l'intérieur de la collerette 21.

La succession des nervures 28 et des zones en retrait 29 dans le corps 17 confère à celui-ci une relative souplesse mise à profit comme exposé ci-après.

Les zones en retrait 29 sont délimitées par une surface en creux 30 dont le profil concave est dirigé vers l'intérieur du corps 17, chacune de ces zones étant adaptée à recevoir les bras latéraux 24 et 25 de l'agrafe métallique 23 exerçant un effort de pincement transversal pour immobiliser le corps dans la position à chaque fois correspondante.

On comprend alors aisément que, la butée 16 étant montée dans la collerette de support 21 portée par le renfort 10 et immobilisée dans la position adéquate par l'agrafe métallique 23 engagée dans la zone en retrait 29 disposée en regard, la fermeture du capot 5 sur l'ouverture du compartiment moteur 4 puisse se réaliser dans les conditions requises lors d'une utilisation normale, en ajustant préalablement la position de la portée 20 fixée à l'extrémité de l'embout 18 par action sur le filetage 19 qui les écarte ou rapproche relativement l'un par rapport à l'autre.

En cas exceptionnel de choc violent de la tête d'un piéton sur le capot 5, ce dernier doit pouvoir s'effacer sur une distance importante, de l'ordre de 80 mm selon la Norme, en absorbant les effets de ce choc, sans risquer que la butée ne forme un point dur réagissant en sens inverse sur la tête, risquant d'occasionner à celle-ci des lésions préjudiciables.

Dans cette hypothèse d'un choc brutal et important, l'effort exercé sur le corps 17 de la butée 16 par l'intermédiaire du capot 5, de son renfort interne 12, de la portée 20 et de l'embout 18, lui permet de s'effacer autant que nécessaire pour absorber les effets de ce choc, en s'enfonçant à travers le passage central 22 de la collerette de support 21, ce mouvement du corps, par l'action de ses nervures circonférentielles 28, provoquant l'écartement transversal des branches latérales 24 et 25 de l'agrafe métallique 23 le pinçant dans une zone de retrait 29, et se poursuivant jusqu'à ce que l'effort cesse, les branches de l'agrafe se rétractant à nouveau en s'engageant dans une autre zone en retrait 29, alors disposée en regard.

On réalise ainsi une butée rétractable de conception très simple qui permet à la fois son positionnement adéquat lors de son fonctionnement normal et son glissement vers le bas sous l'effet d'un choc important pour absorber une fraction essentielle de l'énergie due à ce choc et éviter ainsi une réaction en direction du capot.

Bien entendu, il va de soi que l'invention ne se limite pas à l'exemple de réalisation plus spécialement décrit ci-dessus et représenté sur les dessins annexés ; elle en embrasse au contraire toutes les variantes.

## Revendications

1. Butée rétractable au choc pour véhicule automobile, comportant un corps cylindrique (17) à axe sensiblement vertical, associé à une collerette de maintien (21) et comprenant des moyens (19) propres à ajuster son positionnement en hauteur vis-à-vis d'un support fixe (10) appartenant à la carrosserie (2) du véhicule, cette collerette s'étendant dans un plan horizontal, le corps recevant un embout d'appui (18), à positionnement réglable axialement et sur lequel s'appuie un élément mobile (5,12), du genre capot d'obturation du compartiment moteur (4) du véhicule, appliqué sur la butée lors de la fermeture de ce capot, **caractérisée en ce que** le corps (17) présente une souplesse relative dans le sens axial et est aménagé pour être partiellement rétractable par enfoncement à force à l'intérieur de la collerette (21) sous l'effet d'un choc sur le capot (5) dépassant un seuil donné, en permettant d'absorber l'énergie cinétique créée par ce choc.

2. Butée rétractable selon la revendication 1, **caractérisée en ce que** l'embout d'appui (18) comporte un filetage externe (19) coopérant avec un filetage homologue prévu dans le corps (17).

3. Butée rétractable selon l'une des revendications 1 ou 2, **caractérisée en ce que** l'embout (18) comprend une portée d'extrémité (20), sur laquelle s'appuie le capot (5).

4. Butée rétractable selon l'une quelconque des revendications 1 à 3, **caractérisée en ce que** le corps (17) comporte une surface extérieure délimitée par une succession de nervures circonférentielles (28), séparées par des zones en léger retrait (29) formant autant de positions étagées d'arrêt du corps consécutivement à l'effort d'enfoncement de celui-ci dans la collerette (21) sous l'effet du choc.

5. Butée rétractable selon la revendication 4, **caractérisée en ce que** les zones en retrait (29) du corps (17) séparant deux nervures circonférentielles successives (28) présentent une surface dont le profil concave (30) est dirigé vers l'intérieur du corps.

6. Butée rétractable selon l'une quelconque des revendications 1 à 5, **caractérisée en ce que** la collerette (21) comporte une bague d'arrêt cylindrique (27) et présente un passage central (23) autorisant l'enfoncement axial du corps (17), et une agrafe (23) propre à se disposer dans une zone en retrait (29) du corps pour immobiliser celui-ci en l'absence d'effort d'enfoncement.

7. Butée rétractable selon la revendication 6, **caractérisée en ce que** l'agrafe (23) est métallique et forme ressort de pincement à action transversale, apte à s'engager dans la zone en retrait (29) située en regard afin d'immobiliser le corps vis-à-vis de la collerette (21), l'effort exercé sur l'embout provoquant la sortie de l'agrafe de la zone en permettant l'enfoncement de celui-ci dans le passage central (23) de la collerette, jusqu'à ce que, en fin de course, l'agrafe se rétracte et arrête à nouveau le corps dans la collerette.

8. Butée rétractable selon l'une quelconque des revendications 6 ou 7, **caractérisée en ce que** l'agrafe (23) est métallique et présente un profil en épingle à cheveux, avec une anse médiane (26), permettant son extraction par glissement dans son plan contre la collerette (21).

9. Butée rétractable selon la revendication 8, **caractérisée en ce que** l'agrafe (23) est maintenue appliquée contre la collerette (21) par la bague d'arrêt (27).

10. Butée rétractable selon la revendication 6, **caractérisée en ce que** l'agrafe (23) est venue de fabrication avec la collerette (21), et réalisée en un matériau plastique moulé.
